# EUROPEAN PATENT APPLICATION

(11) **EP 3 528 131 A1**
(43) Date of publication of application: **21.08.2019**
(21) Application number: 18205575.6
(22) Date of filing: 12.11.2018
(51) Int. Cl.: G06F 13/00, G05B 19/408

(54) **CONTROL DEVICE, CONTROL SYSTEM, CONTROL METHOD, AND CONTROL PROGRAM**

(30) Priority: 14.02.2018 JP 2018024087
(71) Applicant: Omron Corporation, Kyoto-shi, Kyoto 600-8530 (JP)
(72) Inventor: SAWADA, Shigenori, Kyoto-shi, Kyoto 600-8530 (JP); YONEDA, Mitsuhiro, Kyoto-shi, Kyoto 600-8530 (JP); LI, Tianbing, Kyoto-shi, Kyoto 600-8530 (JP)
(74) Representative: 2K Patentanwälte Blasberg Kewitz & Reichel

(57) **Abstract**

A control device (10) includes a cyclic communication part (121) and a communication management part (110). The cyclic communication part (121) controls communication of first control data and second control data. The first control data is control data of which arrival in a first guarantee time is guaranteed according to a preset cyclic period. In the second control data, arrival in a second guarantee time longer than the cyclic period is guaranteed and a sequence of information included is determined. When a data volume of second control data exceeds a communication volume for second control data based on the cyclic period, the communication management part (110) divides the second control data into a plurality of communication data. The communication management part (110) attaches an identifier indicating communication in a divided manner, a data volume, and a communication order to the plurality of communication data.

## Description

### BACKGROUND

### Technical Field

The disclosure relates to a control system including a control device that performs communication of a plurality of types of control data having different performance requirements and various slave devices.

### Description of Related Art

Currently, many factory automation (FA) systems are in practical use. An FA system includes a control device and a plurality of slave devices. The plurality of slave devices include a measurement instrument, a switch, a control driver, and the like, and a control target device is connected to the control driver.

The control device performs communication of control data with a plurality of slave devices. In this case, the control device performs sequential communication of control data with a plurality of slave devices using a preset control period (cyclic period). Therefore, a real time property of transmission of control data is guaranteed. Hereinafter, the control data will be referred to as cyclic control data.

On the other hand, information system data different from cyclic control data is communicated between a control device and a plurality of slave devices. Information system data is data that need not necessarily be communicated using a cyclic period and has a relatively large volume like cyclic control data. In the system shown in Patent Document 1, the information system data is divided and communicated in a plurality of cyclic periods in a divided manner.

[Patent Document 1] Japanese Unexamined Patent Application Publication No. 2004-363782

### SUMMARY

Currently, as a slave device, a robot device or a robot control device configured to control a robot device is often used.

However, control data communicated to a robot device, a robot control device, or the like includes a plurality of commands and the like, and may have a larger volume than cyclic control data of the related art. Hereinafter, control data that is communicated to a robot device, a robot control device, or the like and has a larger volume than cyclic control data of the related art will be referred to as quasi-control data.

Therefore, the control device may not be able to communicate all quasi-control data within a cyclic period.

On the other hand, in quasi-control data, a sequence of commands included and the like is determined. Thus, when a slave device such as a robot device or a robot control device makes a mistake in the sequence, a problem such as a malfunction of the robot device is caused.

In addition, the disclosure is not limited to a robot device, a robot control device, and the like, and the same problem occurs in other communication in which a volume of control data is larger than a maximum volume for communication based on one cyclic period (corresponding to the above quasi-control data), and the order of commands in control data is important.

Thus, an objective of the disclosure is to provide a control data communication technology through which, even if a volume of control data is larger than a maximum volume for communication based on one cyclic period, it is possible to accurately perform reception without changing a structure of control data on the reception side.

According to an example of the disclosure, a control device includes a cyclic communication part and a communication management part. The cyclic communication part controls communication of first control data and second control data. The first control data is control data of which arrival in a first guarantee time is guaranteed according to a preset cyclic period. In the second control data, arrival in a second guarantee time longer than the cyclic period is guaranteed and a sequence of information included is determined. The communication management part manages a communication schedule of first control data and second control data. In addition, when a data volume of second control data exceeds a communication volume for the second control data based on the cyclic period and a data volume of first control data, the communication management part divides the second control data into a plurality of communication data according to the communication volume for the second control data. The communication management part attaches an identifier indicating communication in a divided manner, a data volume of the second control data, and a communication order according to division into the plurality of communication data. The communication management part provides the plurality of communication data to the cyclic communication part.

In this configuration, even if a data volume of second control data is larger than a communication volume for second control data based on the cyclic period and a data volume of first control data, the second control data is reliably transmitted to a slave device to which the control device is connected. In addition, in the slave device, the order of communication data can be recognized, and the information included in the second control data is restored in the correct order.

In addition, according to an example of the disclosure, when there are a plurality of second control data, the communication management part of the control device performs division for each of the plurality of second control data using a second guarantee time for each of the plurality of second control data and a transmission volume for the second control data and provides the divided data to the cyclic communication part.

In this configuration, even if there are a plurality of second control data, the plurality of second control data are reliably communicated and accurately restored on the side of the slave device.

In addition, according to an example of the disclosure, the communication management part provides the communication data formed from the plurality of second control data to the cyclic communication part in a manner that the data is communicated within the same cyclic period.

In this configuration, a plurality of second control data having a large data volume are communicated substantially in parallel over time.

In addition, according to an example of the disclosure, the communication management part attaches a data volume to the plurality of communication data and provides the data to the cyclic communication part.

In this configuration, it is possible to reliably ascertain an error related to communication such as lack of information for the plurality of communication data.

In addition, according to an example of the disclosure, the control device includes a message communication part configured to control transmission and reception of information system data which is different from the first control data and the second control data and for which a time is not guaranteed. The communication management part divides the second control data using a communication volume of the information system data.

In this configuration, the second control data is reliably transmitted while the information system data is communicated.

In addition, according to an example of the disclosure, a control system includes one of the above control devices and a robot device or a robot control device that is communicably connected to the control device. The second control data includes a command group for robot control.

In this configuration, when a robot device is included as an FA system, a plurality of commands including a command order are accurately communicated to the robot device within an arrival guarantee time. Therefore, it is possible to prevent problems such as a delay of an operation of a robot device and a malfunction.

According to the disclosure, even if a volume of control data is larger than a maximum volume for communication based on one cyclic period, it is possible to accurately receive control data without changing a structure of the control data on the reception side.

### BRIEF DESCRIPTION OF THE DRAWINGS

FIG. 1 is a diagram showing a schematic configuration of a device in a control system.
FIG. 2 is a block diagram showing a hardware configuration of a control device.
FIG. 3 is a functional block diagram of the control device.
FIG. 4(A) is a flowchart showing an initial process performed by the control device when no information system data is included and FIG. 4(B) is a flowchart showing an initial process performed by the control device when information system data is included.
FIG. 5 is a flowchart showing a division and transmission process of second control data performed by the control device.
FIG. 6 is a diagram showing a schematic configuration of communication data.
FIG. 7(A) is a diagram showing a data structure of a frame n1 and a frame n2 when second control data is divided, FIG. 7(B) is a diagram showing a data structure of second control data.
FIG. 8 is a diagram showing a data structure during communication of first control data and second control data.
FIG. 9 is a diagram showing a data structure during communication of first control data and second control data.
FIG. 10 is a diagram showing a data structure during communication of first control data and second control data.
FIG. 11 is a flowchart showing an example of a process of allocating and dividing a plurality of second control data into a plurality of frames.
FIG. 12 is a flowchart showing an example of a process of dividing and transmitting a plurality of second control data.
FIGS. 13(A) and 13(B) are flowcharts showing examples of processes for second control data that is divided and transmitted and second control data that is transmitted without division.

### DESCRIPTION OF THE EMBODIMENTS

Embodiments of the disclosure will be described below with reference to the drawings.

### •Application example

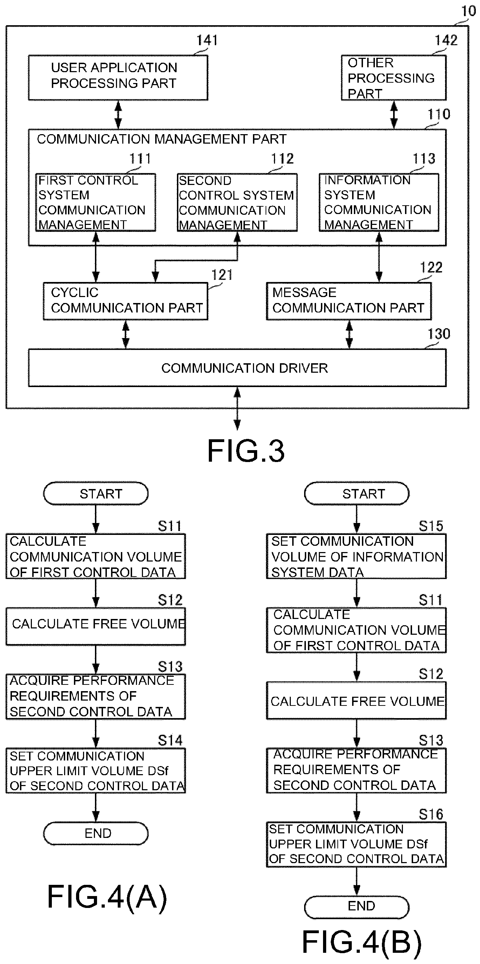

First, an application example of a control device according to an embodiment of the disclosure will be described with reference to the drawings. FIG. 3 is a functional block diagram of the control device.

As shown in FIG. 3, a control device 10 includes at least a communication management part 110 and a cyclic communication part 121, and includes a communication driver 130.

The communication management part 110 performs first control system communication management 111 and second control system communication management 112. In addition, the communication management part 110 performs scheduling of the first control system communication management 111 and the second control system communication management 112, that is, scheduling of transmission and reception of various types of data to be described below.

In the first control system communication management 111, communication management (scheduling) of first control data that is transmitted and received for each cyclic period according to a preset cyclic period is performed. The first control data is control data having a small data volume, and includes, for example, a servo command value, an encoder value, an on and off control value of a sensor, and the like. The first control data is control data for which a time is guaranteed so that it is transmitted and received in a first guarantee time defined by a cyclic period.

In the second control system communication management 112, communication management (scheduling) of second control data having performance requirements different from those of first control data is performed. The second control data is control data having a relatively large data volume, and includes, for example, a command group assigned to a robot device or a robot control device. The second control data is control data that is defined in a manner that communication is completed in an arrival guarantee time longer than one cycle of a cyclic period. As the second control data, there is data having a larger data volume than first control data. For example, there is data having a larger volume than a data volume that can be communicated in one cycle of a cyclic period.

The communication management part 110 provides first control data and second control data to the cyclic communication part 121.

In this configuration, the communication management part 110 determines a maximum volume (transmission volume) of second control data that can be transmitted in one cycle of a cyclic period based on the cyclic period and a data volume of the first control data. The communication management part 110 divides the second control data into a plurality of communication data if the data volume of the second control data is larger than a transmission volume. Data volume of each of the plurality of communication data is smaller than the transmission volume.

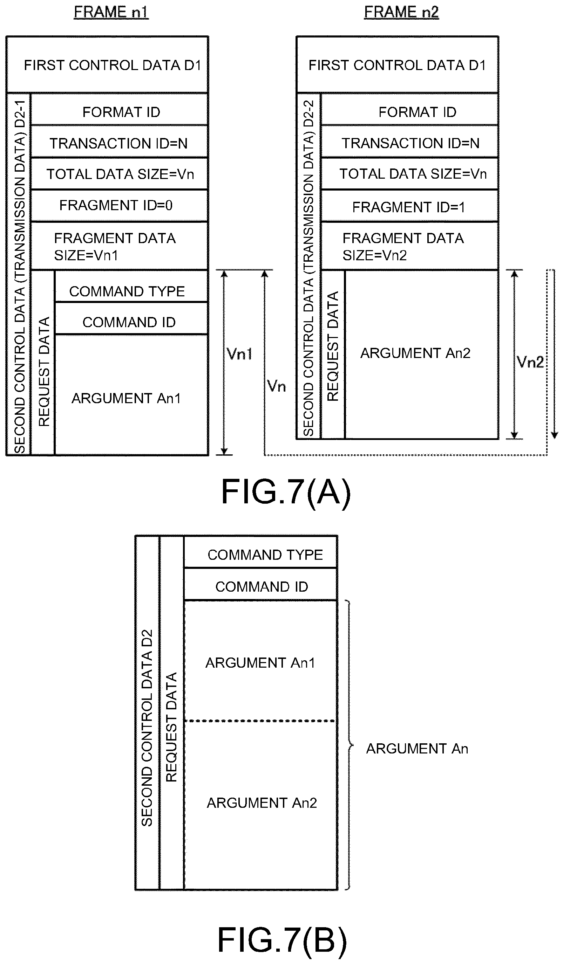

The communication management part 110 attaches an identifier indicating transmission in a divided manner (a fragment ID to be described below (refer to FIG. 7(A) and FIG. 7(B))), a data volume of second control data (a total data size to be described below (refer to FIG. 7(A) and FIG. 7(B))), and a transmission order according to division (a fragment ID to be described below is shared (refer to FIG. 7(A) and FIG. 7(B))) to each of a plurality of communication data, generates a plurality of communication data, and manages them using the second control system communication management 112. Then, in the second control system communication management 112, each of a plurality of communication data is sequentially output according to a cyclic period to the cyclic communication part 121 according to scheduling.

The cyclic communication part 121 converts the first control data and the second control data (respective communication data) into a communication data format and outputs it to the communication driver 130. The communication driver 130 transmits the first control data and the second control data (respective communication data) to a slave device connected via a control network to be described below according to a cyclic period.

When such a configuration and process are used, even if a volume of second control data is larger than a transmission volume for second control data based on one cyclic period, the second control data can be accurately transmitted to the slave device while a time guarantee for the second control data is realized. In addition, the slave device can restore information included in the second control data in the correct order.

### •Configuration examples

A control device, a control system, a control method, and a control program according to embodiments of the disclosure will be described with reference to the drawings. In the present embodiment, a factory automation (FA) system will be exemplified as a control system.

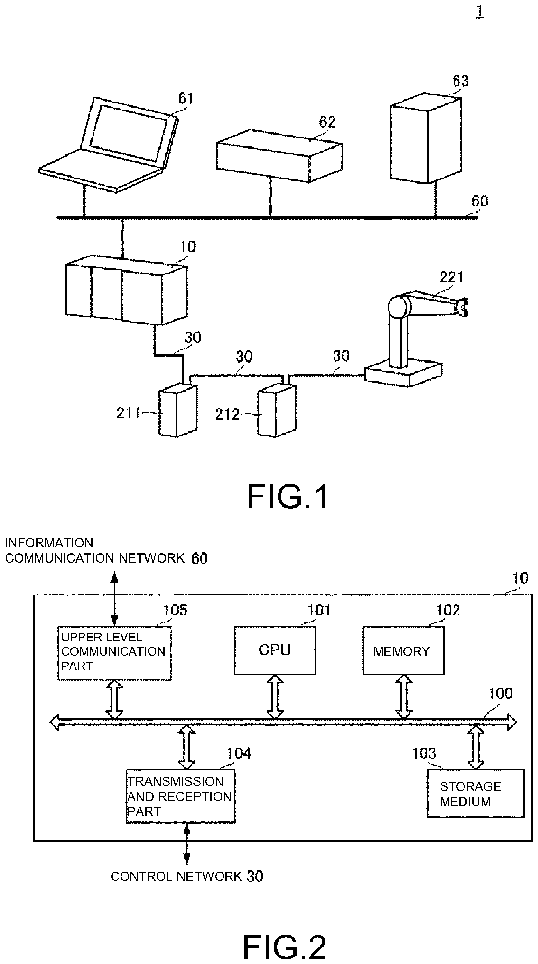

FIG. 1 is a diagram showing a schematic configuration of a device in a control system. As shown in FIG. 1, a control system 1 includes a control device 10, a slave device 211, a slave device 212, a slave device 221, a control network 30, an information communication network 60, a personal computer 61, an industrial personal computer 62, and a database device 63.

### (Data definition)

First, a definition of data will be described.

In first control data, an arrival guarantee time (first guarantee time) is determined according to one cycle of a cyclic period (for example, 10 msec or shorter) used in the control network 30. The first control data is composed of a control data group of 1 bit to several tens of bytes. The arrival guarantee time is, for example, the longest (latest) time within which control data should arrive in order for a target slave device to operate normally.

The second control data is control data that is defined so that communication is completed in an arrival guarantee time (first guarantee time) longer than one cycle of a cyclic period. As the second control data, there is data having a larger data volume than first control data. For example, there is data having a larger volume than a data volume that can be communicated in one cycle of a cyclic period. The second control data is control data in which a sequence of a plurality of pieces of information to be included is determined. The second control data includes, for example, a plurality of command groups that implement a sequence operation of a robot device.

The information system data is data which is different from the first control data and the second control data and in which an arrival guarantee time is not set. For example, the information system data may include various types of data such as acquisition request data of a log of each device connected to the control network 30, a log, and a monitoring image.

The first control data and the second control data are data that is communicated according to a cyclic period, and the information system data is data that is communicated according to a specification that need not conform to a cyclic period.

### (Control system)

The control network 30 is, for example, a network according to EtherCAT (registered trademark) or PROF1NET as a network standard. Here, the control network 30 is not limited thereto, and may be a network through which data is transmitted and received in synchronization with a cyclic period. The control device 10, the slave device 211, the slave device 212, and the slave device 221 are connected via the control network 30.

The information communication network 60 is, for example, a network according to Ethernet (registered trademark) as a network standard. The control device 10, the personal computer 61, the industrial personal computer 62, and the database device 63 are connected via the information communication network 60.

In the personal computer 61, an editing tool of a control program and the like are installed. The personal computer 61 creates, edits, and outputs a control program of the control device 10, the slave device 211, and the slave device 212. The personal computer 61 outputs the control program to the control device 10.

In the industrial personal computer 62, for example, an editing tool of a robot control program and the like are installed. The industrial personal computer 62 creates, edits, and outputs a control program of the slave device 221. The industrial personal computer 62 outputs, for example, the robot control program to the control device 10.

The database device 63 stores a log of each device from the control device 10 and the like. Here, a device that generates and acquires original data of information system data is not limited to the database device 63, and may be another device. In addition, the personal computer 61, the industrial personal computer 62, and the database device 63 are devices constituting a host system, and the devices constituting the host system are not limited thereto.

Specifically, the control device 10 is realized by, for example, a programmable logic controller (PLC). The control device 10 may be another device as long as it performs communication of control data via the control network 30 and performs communication of various types of data via the information communication network 60.

For example, the control device 10 may generate first control data using the control program from the personal computer 61. For example, the control device 10 may generate second control data using the robot control program from the industrial personal computer 62. Here, the control device 10 can generate second control data using the control program from the personal computer 61.

In addition, the control device 10 generates information system data. The information system data includes information that the personal computer 61 wishes to acquire from the slave device 211, the slave device 212, and the slave device 221 connected to the control network 30, an acquisition request of the information, and the like. Therefore, for example, information system data is generated by the control device 10 according to an instruction from the personal computer 61.

Specifically, the slave device 211 and the slave device 212 are realized by a measurement instrument, for example, a servo driver, or a sensor. Here, the slave device 211 and the slave device 212 may be other devices as long as they are devices that operate with first control data.

Specifically, the slave device 221 is realized by, for example, a robot device or a robot control device connected to a robot device. Here, the slave device 221 may be another device as long as it is a device that operates with second control data.

The control device 10, the slave device 211, the slave device 212, and the slave device 221 perform scheduling of transmission and reception of first control data, second control data, and information system data. The control device 10, the slave device 211, the slave device 212, and the slave device 221 perform communication of first control data and second control data according to the schedule and according to a cyclic period.

In this case, as described above, the control device 10 divides second control data into a plurality of communication data when a data volume of second control data is larger than a maximum volume (transmission volume) of second control data that can be communicated in one cycle of a cyclic period. Then, the control device 10 allocates the plurality of communication data in a plurality of cyclic periods and performs communication. Here, the control device 10 performs this division process for each slave device.

### (Hardware configuration of control device)

FIG. 2 is a block diagram showing a hardware configuration of a control device.

As shown in FIG. 2, as a hardware configuration, the control device 10 includes a CPU 101, a memory 102, a storage medium 103, a transmission and reception part 104, and an upper level communication part 105. In the control device 10, the CPU 101, the memory 102, the storage medium 103, the transmission and reception part 104, and the upper level communication part 105 are connected through a data bus 100.

The CPU 101 reads a system program stored in the storage medium 103 and a user application program to the memory 102 and executes them, and thus implements processes of functional blocks to be described below. The memory 102 is realized by a volatile memory element, for example, a DRAM and an SRAM. In addition, the storage medium 103 is realized by a nonvolatile storage medium, for example, a magnetic storage medium and a flash memory.

The transmission and reception part 104 is an interface of the control network 30 in the control device 10 and transmits and receives (communicates) first control data and second control data according to a cyclic period. In addition, for example, the transmission and reception part 104 transmits and receives (communicates) information system data using a communication band different from a communication band occupied by first control data and second control data in one cycle of a cyclic period.

The upper level communication part 105 is an interface of the information communication network 60 in the control device 10 and performs communication with each device of the above host system.

### (Functional block of control device)

FIG. 3 is a functional block diagram of a control device.

As shown in FIG. 3, the control device 10 includes a communication management part 110, a cyclic communication part 121, a message communication part 122, a communication driver 130, a user application processing part 141, and another processing part 142.

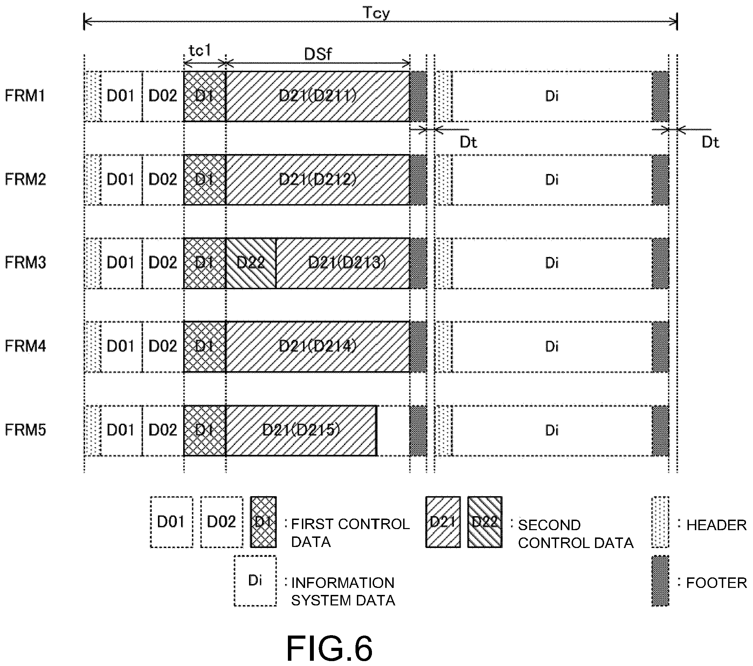

The communication management part 110 performs the first control system communication management 111, the second control system communication management 112, and information system communication management 113. In addition, the communication management part 110 performs scheduling of the first control system communication management 111, the second control system communication management 112, and the information system communication management 113, that is, communication scheduling of various types of data to be described below. In this case, the communication management part 110 allocates a communication band of each slave device in one cycle of a cyclic period based on the number of communication target slave devices, and a type (refer to FIG. 6).

As described above, in the first control system communication management 111, communication management of first control data communicated for each cyclic period according to a preset cyclic period is performed.

In the second control system communication management 112, communication management of second control data is performed. In this case, in the second control system communication management 112, second control data is divided into a plurality of communication data when a data volume of second control data is larger than a maximum volume (communication volume) of second control data that can be transmitted in one cycle of a cyclic period. Then, in the second control system communication management 112, communication management in units of a plurality of communication data is performed.

In the information system communication management 113, communication management of information system data is performed. In this case, information system data is also divided into a plurality of data when a data volume of information system data is larger than a maximum volume (transmission volume) of information system data that can be communicated in one cycle of a cyclic period. Then, in the information system communication management 113, communication management is performed in units of a plurality of divided data.

The communication management part 110 provides first control data and second control data to the cyclic communication part 121 according to a transmission and reception (communication) schedule. In this case, when second control data is divided into a plurality of communication data, the communication management part 110 provides each of the plurality of communication data to the cyclic communication part 121.

The communication management part 110 provides information system data to the message communication part 122 according to a transmission and reception schedule. In this case, when information system data is divided into a plurality of data, the communication management part 110 provides each of the plurality of divided data to the message communication part 122.

The cyclic communication part 121 converts first control data and second control data into a data format of the control network 30. The cyclic communication part 121 outputs the converted first control data and second control data to the communication driver 130 according to a transmission and reception schedule provided from the communication management part 110.

The message communication part 122 outputs information system data to the communication driver 130 according to a transmission and reception schedule provided from the communication management part 110.

The communication driver 130 controls the transmission and reception part 104, and performs communication of first control data and second control data according to a cyclic period via the control network 30. In this case, when second control data is divided into a plurality of communication data, the plurality of communication data are sequentially communicated according to a cyclic period. Similarly, when information system data is divided into a plurality of data, the plurality of divided data are sequentially communicated.

Here, the user application processing part 141 executes the above user application program. The user application processing part 141 acquires second control data from the industrial personal computer 62. For example, the other processing part 142 performs a start process of the control device 10, an initial process of control using the control network 30, and the like.

### (Specific communication process)

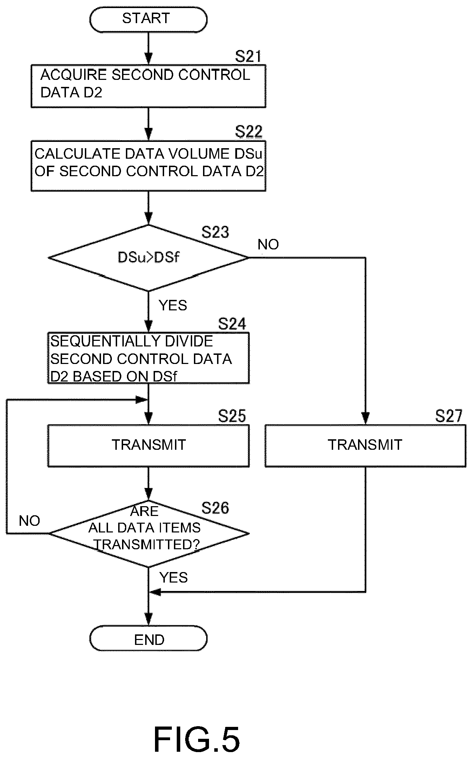

In such a configuration, first control data and second control data are transmitted when the control device 10 (the communication management part 110) performs a control flow shown in FIG. 4(A), FIG. 4(B), and FIG. 5. FIG. 4(A) is a flowchart showing an initial process performed by the control device when no information system data is included and FIG. 4(B) is a flowchart showing an initial process performed by the control device when information system data is included. FIG. 5 is a flowchart showing a division and transmission process of second control data performed by the control device. FIG. 6 is a diagram showing a schematic configuration of communication data. Here, FIG. 6 shows an example in which the number of communication target slave devices for second control data is one. In addition, FIG. 6 shows a data structure example in the system configuration shown in FIG. 1.

First, a structure of frame data will be described with reference to FIG. 6. As shown in FIG. 6, the frame data is data arranged, from the beginning, in order of a control data header, first control data D01 for the slave device 211, first control data D02 for the slave device 212, first control data D1 for the slave device 221, second control data D21 for the slave device 221, a control data footer, an information system data header, information system data Di, and an information system data footer. In addition, in FIG. 6, in the frame data, between the control data footer and the information system data header, and after the information system data header, an empty data area corresponding to a waiting time Dt for data collision avoidance is set. This waiting time Dt is preferably set, but it can be omitted. Thus, according to frame data having such a structure, communication in one cycle of a cyclic period is performed.

Next, a specific process when division of second control data is necessary for the slave device 221 will be described.

### (A. When information system data is not communicated)

An initial process of the division process of second control data when a communication time for information system data is not set will be described with reference to FIG. 4(A).

First, the control device 10 allocates a communication band for each slave device with respect to one cycle of a cyclic period based on the number of communication target slave devices and a type. The control device 10 calculates a communication volume of first control data (S11). Specifically, the control device 10 extracts all of first control data provided to the slave device 211, the slave device 212, and the slave device 221 connected via the control network 30. These can be extracted and calculated based on a control program from the personal computer 61.

The control device 10 calculates a free volume for second control data for each slave device that performs communication of second control data included in one cycle of a cyclic period (S12). In the case of TDMA, the free volume is a volume excluding a communication volume (volume corresponding to tc1 in FIG. 6) of first control data from a communication band of each slave device that performs communication of second control data in one cycle of a cyclic period (Tcy in FIG. 6). Therefore, the control device 10 calculates a free volume obtained by subtracting a communication volume of first control data from an upper limit volume with which each slave device that performs communication of second control data can perform communication in one cycle of a cyclic period.

The control device 10 acquires performance requirements of second control data (S13). The performance requirements of second control data include an arrival guarantee time of second control data. These performance requirements can be acquired based on a control program (for example, a robot control program) from the industrial personal computer 62.

The control device 10 sets a communication upper limit volume DSf of second control data for each slave device that performs communication of second control data based on the free volume and the performance requirements (S14). The communication upper limit volume DSf corresponds to a maximum volume with which each slave device can perform communication of second control data in one cycle of a cyclic period. Specifically, for example, when performance requirements are satisfied, the control device 10 sets the free volume to the communication upper limit volume DSf.

### (B When information system data is communicated)

An initial process of the division process of second control data when a communication time for information system data is set will be described with reference to FIG. 4(B). Here, description of the same processes as in FIG. 4(A) will be simplified.

First, the control device 10 allocates a communication band for control data for each slave device with respect to one cycle of a cyclic period based on the number of communication target slave devices and a type. In this case, the control device 10 sets a communication volume of information system data (S15), and allocates a communication band for control data for each slave device in consideration of a communication volume of the information system data. The control device 10 calculates a communication volume of first control data (S11). The control device 10 calculates a free volume included in one cycle of a cyclic period (Tcy in FIG. 6) (S12). The control device 10 acquires performance requirements of second control data (S13).

The control device 10 sets a communication volume of information system data (S15). The communication volume of information system data can be set by receiving an instruction from, for example, the personal computer 61, the database device 63, or the like.

The control device 10 sets a communication upper limit volume DSf corresponding to a volume with which second control data can be transmitted in one cycle of a cyclic period based on the free volume, the performance requirements, and the communication volume of information system data (S16).

Here, in the initial process shown in the above (A) and (B), the control device 10 generates a warning as long as performance requirements of second control data are not satisfied in the calculated free volume. For example, specifically, the control device 10 calculates the number of divisions of second control data from the calculated free volume and calculates a communication completion scheduled time for second control data from the number of divisions. When a communication completion scheduled time is longer than an arrival guarantee time based on performance requirements, the control device 10 determines that performance requirements are not satisfied and generates a warning.

Next, a communication management process during an operation of the control system will be described with reference to FIG. 5 and FIG. 6.

The control device 10 acquires the second control data D2 (S21). The control device 10 calculates a data volume DSu of the second control data D2 (S22).

When the data volume DSu is larger than the communication upper limit volume DSf (YES in S23), the control device 10 divides the second control data D2 based on the communication upper limit volume DSf and generates a plurality of communication data (corresponds to an aspect of communication data of the disclosure) (S24). In this case, for example, the control device 10 sequentially divides the second control data D2 from the leading bit for each bit volume corresponding to the communication upper limit volume DSf and generates a plurality of communication data.

The control device 10 transmits a plurality of communication data according to a cyclic period (S25). The control device 10 repeatedly transmits communication data according to a cyclic period (S25) until all communication data is transmitted (NO in S26). In this case, the control device 10 transmits communication data in order from the side of the leading bit of the second control data D2.

When the control device 10 transmits all communication data constituting the second control data D2 (YES in S26), the process ends.

On the other hand, when the data volume DSu is equal to or smaller than the communication upper limit volume DSf (NO in S23), the control device 10 transmits the second control data D2 without change (S27).

When such a process is performed, for example, in a data structure shown in FIG. 6, first control data and second control data are transmitted. Here, in FIG. 6, three frames are exemplified, and an example in which second control data D21 is transmitted using a first frame FRAME1 and a second frame FRAME2 and another second control data D22 is transmitted using a third frame FRAME3 is shown.

In the example in FIG. 6, since a data volume DSu21 of the second control data D21 exceeds the communication upper limit volume DSf, the second control data D21 is divided. In this case, in the second control data D21, a data volume corresponding to the communication upper limit volume DSf on the side of the leading bit is used for first communication data D21-1 and the remaining data volume is used for second communication data D21-2. On the other hand, since a data volume DSu22 of the second control data D22 does not exceed the communication upper limit volume DSf, the second control data D22 is not divided.

In the first frame FRAME 1, the control device 10 sequentially transmits first control data D1 and communication data D21-1 of the second control data D21 within a cyclic period (Tcy).

Next, in the second frame FRAME2, the control device 10 sequentially transmits first control data D1 and communication data D21-2 of the second control data D21 within a cyclic period (Tcy). Thus, transmission of the second control data D21 is completed.

Next, in the third frame FRAME3, the control device 10 sequentially transmits first control data D1 and second control data D22 within a cyclic period (Tcy).

Here, a transmission order of the second control data D21 and the second control data D22 is not limited to the above order. For example, the control device 10 may compare arrival guarantee times for the second control data D21 and the second control data D22 and transmit second control data having a shorter arrival guarantee time first.

When such processes are performed, it is possible to reliably transmit second control data having a larger volume than the communication upper limit volume DSf based on a cyclic period.

### (Data structure during communication of second control data)

### • When second control data is divided and transmitted

FIG. 7(A) is a diagram showing a data structure during communication of first control data and second control data, and FIG. 7(B) is a diagram showing a data structure before communication of second control data shown in FIG. 7(A).

First, as shown in FIG. 7(B), the second control data D2 includes, as request data, a command type, a command ID, an argument An, and the like, and is data arranged in that order from the leading bit. The argument An includes a command group that is actually used for control, and the command type and the command ID are data for identifying a command group described in the argument An. While request data has been exemplified here, this can also be applied to response data with respect to request data. Also, the request data and the response data are not limited to the above data structure and can be arbitrarily defined.

When a data volume of the second control data D2 exceeds the communication upper limit volume DSf, as shown in FIG. 7(A), divided second control data (communication data) D2-1 and D2-2 are generated. Then, frames FRAME n1 and FRAME n2 include first control data D1 and divided second control data (communication data) D2-1, and the frame FRAME n2 includes first control data D1 and divided second control data (communication data) D2-2.

Second control data (communication data) D2-1 of the frame FRAME n1 includes a format ID, a transaction ID, a total data size, a fragment ID, a fragment data size, and request data, and is data arranged in that order from the leading bit.

Second control data (communication data) D2-2 of the frame FRAME n2 includes a format ID, a transaction ID, a total data size, a fragment ID, a fragment data size, and request data, and is data arranged in that order from the leading bit.

The format ID is identification data in a data format of second control data. According to the format ID, a data format of second control data shown below can be identified.

The transaction ID is identification data representing second control data. When transaction IDs of second control data of a plurality of frames are compared, it is possible to determine whether second control data of a plurality of frames are based on the same second control data. That is, when transaction IDs of second control data (communication data) of a plurality of frames are the same, it is possible to determine that such second control data (communication data) are based on one second control data.

The total data size represents a total data volume of one second control data. That is, the total data size is represented by a sum of data volumes of a plurality of communication data when second control data is divided into a plurality of communication data. For example, in the case of FIG. 6(A), it can be seen that the total data volume of second control data is Vn. On the other hand, when second control data is not divided, the total data size is represented by a data volume of second control data included in the frame. Therefore, a total data volume of second control data can be detected.

Then, when such a total data size is attached, the slave device 221 can detect a reception error of second control data during restoration. That is, the slave device 221 restores request data of the frame FRAME n1, calculates a data volume Vn1, restores request data of the frame FRAME n2, and calculates a data volume Vn2. The slave device 221 adds the data volume Vn1 and the data volume Vn2, and when the result matches the total data volume Vn, it can be detected that data reception is successful, and when the result does not match the total data volume Vn, a data reception error can be detected.

The fragment ID is identification data indicating the order in the divided second control data D2. That is, according to the fragment ID, a number of a position of second control data (communication data) in this frame after second control data before communication is divided can be identified. For example, according to the example in FIG. 6(A), in the FRAME n1, the fragment ID=0 and the data can be identified as first divided communication data. In the FRAME n2, the fragment ID=1 and the data can be identified as second divided communication data.

Here, request data of the frame FRAME n1 includes a command type, a command ID, and an argument An1 and is data arranged in that order. Request data of the frame FRAME n2 includes an argument An2 and is data arranged in the order. As shown in FIG. 7(B), the argument An1 is data of a part following the command ID in the argument An and the argument An2 is data of a part following the argument An1. That is, request data during communication is generated according to division based on the communication upper limit volume DSf without changing the sequence of data from the leading bit.

Therefore, the slave device 221 receives and analyzes communication data of these frames FRAME n1 and FRAME n2, arranges request data according to the order of the fragment ID, and thus can reliably and accurately restore second control data before communication, that is, before division. Accordingly, the slave device 221 can restore the command group included in the second control data in the correct order and can reliably prevent a malfunction of a robot device and the like. In addition, the slave device 221 detects partial lack of the fragment ID and thus can detect lack of data, and can perform a retransmission request on the control device 10.

The fragment size represents a data volume of second control data (communication data) within the frame. For example, according to the example in FIG. 6(A), in the FRAME n1, the fragment size=Vn1 and a data volume of first divided communication data can be identified as Vn1. In the FRAME n2, the fragment size=Vn2 and a data volume of second divided communication data can be identified as Vn2. When such a fragment size is attached, the slave device 221 calculates a data volume of received request data, compares fragment sizes, and thus can detect a reception error.

### . When second control data is transmitted without division.

### (1) When one second control data is transmitted in one frame

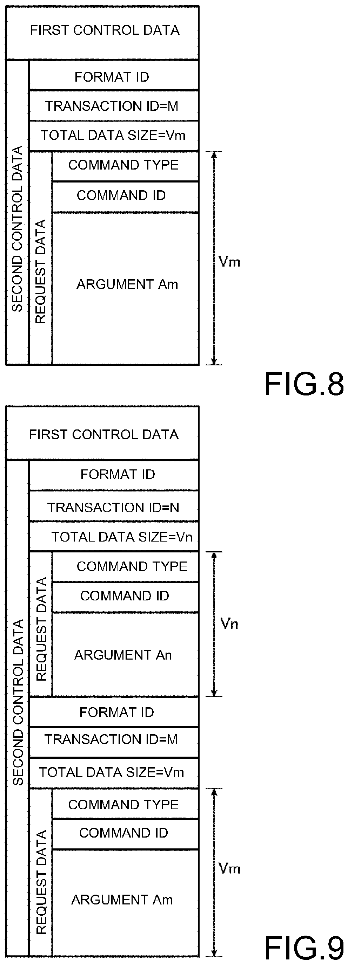

FIG. 8 is a diagram showing a data structure during communication of first control data and second control data. In the example shown in FIG. 8, a case in which a data volume of second control data is smaller than the communication upper limit volume DSf and one second control data is transmitted within one frame is shown. Here, description of the same parts as the example shown in FIG. 7(A) and FIG. 7(B) will be simplified.

When a data volume of second control data is smaller than the communication upper limit volume DSf, as shown in FIG. 8, second control data is transmitted without change.

Second control data (communication data) includes a format ID, a transaction ID, a total data size, and request data, and is data arranged in that order from the leading bit.

### (2) When a plurality of second control data are transmitted within one frame

FIG. 9 is a diagram showing a data structure during communication of first control data and second control data. In the example shown in FIG. 9, a case in which a data volume of second control data is smaller than the communication upper limit volume DSf and two second control data are transmitted within one frame is shown. Here, description of the same parts as the example shown in FIG. 8 will be simplified.

When data volumes of a plurality of second control data is respectively smaller than the communication upper limit volume DSf and a sum of data volumes of a plurality of second control data is smaller than the communication upper limit volume DSf, as shown in FIG. 9, the plurality of second control data are transmitted within one frame.

In this case, different transaction IDs are assigned to a plurality of second control data. Therefore, even if data are continuous, it is possible to identify the plurality of second control data.

Thus, as described above, when the second control data D22 is not divided, the fragment ID and the fragment size are omitted. Therefore, it is possible to reduce the data size of the second control data D22 during communication. In addition, on the other hand, when the fragment ID and the fragment size are not present, the slave device 221 can detect that the second control data D22 is not divided.

### . When a plurality of second control data are divided and transmitted

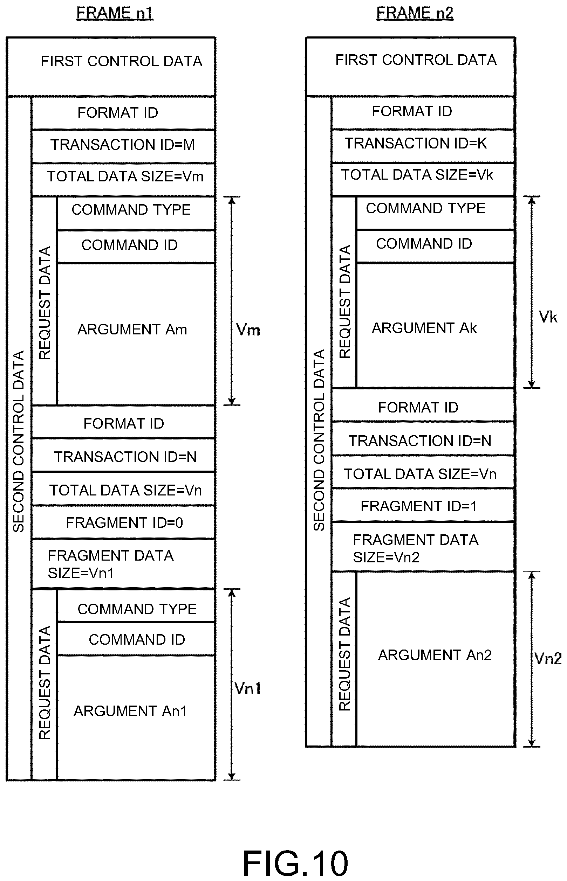

FIG. 10 is a diagram showing a data structure during communication of first control data and second control data. In the example shown in FIG. 10, an example in which a data volume of two second control data is smaller than the communication upper limit volume DSf and a data volume of one second control data exceeds the communication upper limit volume DSf is shown. In addition, in FIG. 10, a case in which two second control data are transmitted within one frame is shown. Here, description of the same parts as the above example will be simplified.

In the example shown in FIG. 10, a data volume of second control data in which M and K are allocated as a transaction ID is smaller than the communication upper limit volume DSf, a data volume of second control data in which N is allocated as a transaction ID exceeds the communication upper limit volume DSf is shown.

In the example shown in FIG. 10, according to the frame FRAME n1, second control data with a transaction ID=M and first communication data based on second control data with a transaction ID=N are transmitted. According to the frame FRAME n2 following the frame FRAME n1, second control data with a transaction ID=K and second communication data following the first communication data based on second control data with a transaction ID=N are transmitted.

In such a case, second control data can be individually identified by the transaction ID and a plurality of communication data constituting one second control data can be individually identified by the fragment ID. In addition, according to the fragment ID, it is possible to easily restore original second control data from a plurality of divided communication data.

Here, a combination of second control data shown in FIG. 10 is an example, and for example, based on the communication upper limit volume DSf, a combination of a plurality of second control data may be determined in a manner that a free time is reduced.

In addition, the following method may be used. Second control data of which division is not necessary is allocated to each frame, and after the allocation, a free time is calculated again. Then, second control data of which division is necessary is divided according to the re-calculated free time.

In addition, as shown in the following, it may be determined whether division is performed and allocation of second control data in each frame may be dynamically determined.

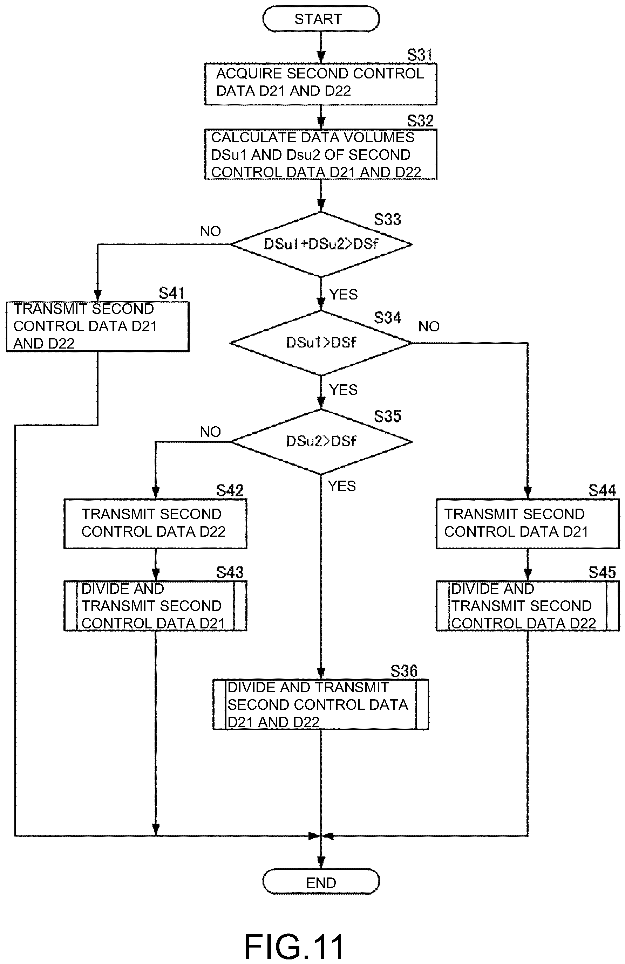

FIG. 11 is a flowchart showing an example of a process of allocating and dividing a plurality of second control data into a plurality of frames. Here, in FIG. 11, a process for two second control data is shown. However, when such a concept is used, three or more second control data can be appropriately allocated.

First, the control device 10 acquires two second control data D21 and D22 (S31). The control device 10 calculates a data volume DSu1 of the second control data D21 and a data volume DSu2 of the second control data D21 (S32).

When an added value of the data volume DSu1 and the data volume DSu2 is equal to or smaller than the communication upper limit volume DSf (NO in S33), the control device 10 transmits the second control data D21 and the second control data D22 within one frame (S41).

When an added value of the data volume DSu1 and the data volume DSu2 exceeds the communication upper limit volume DSf (YES in S33), the control device 10 compares the data volume DSu1 or the data volume DSu2 with the communication upper limit volume DSf.

When both the data volumeDSu1 and the data volumeDSu2 exceed the communication upper limit volume DSf (YES in S34, YES in S35), the control device 10 divides both the second control data D21 and the second control data D22 and transmits them (S36).

When the data volume DSu1 exceeds the communication upper limit volume DSf (YES in S34), and the data volume DSu2 does not exceed the communication upper limit volume DSf (NO in S35), the control device 10 transmits first the second control data D22 of which division is not necessary (S42). Then, the control device 10 divides the second control data D21 and transmits the divided data (S42).

When the data volume DSu1 does not exceed the communication upper limit volume DSf (NO in S34), and the data volume DSu2 exceeds the communication upper limit volume DSf, the control device 10 transmits first the second control data D21 of which division is not necessary (S44). Then, the control device 10 divides the second control data D22 and transmits the divided data (S44).

Here, in the above process, second control data of which division is not necessary is first transmitted and subsequently, second control data of which division is necessary is divided and transmitted. Therefore, regarding second control data of which division is not necessary, transmission of a plurality of second control data can be completed with a simpler process. That is, when there are a plurality of second control data of which transmission completion is necessary, if transmission of second control data of which division is not necessary is first completed, it is thereafter only necessary to simply divide second control data of which division is necessary and transmit the divided data.

However, when it is preferable to compare performance requirements of a plurality of second control data and the like and, for example, to transmit first second control data of which division is necessary, second control data of which division is necessary may be first transmitted and then second control data of which division is not necessary may be transmitted. In addition, second control data of which division is not necessary may be transmitted during transmission of second control data of which division is necessary.

### . Division and transmission of a plurality of second control data

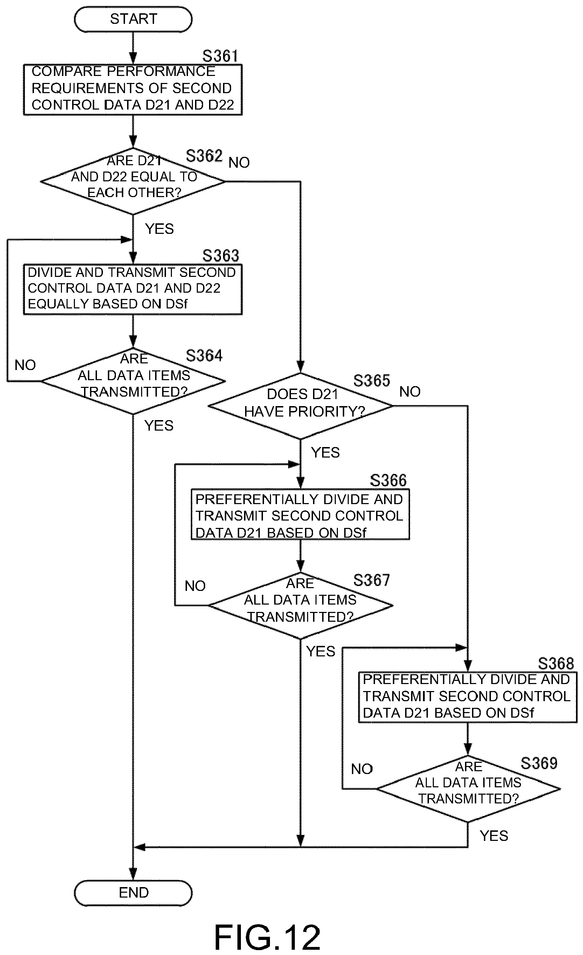

FIG. 12 is a flowchart showing an example of a process of dividing and transmitting a plurality of second control data together.

The control device 10 compares performance requirements of the second control data D21 and the second control data D22 (S361). Specifically, the control device 10 compares an arrival guarantee time of the second control data D21 with an arrival guarantee time of the second control data D22.

When performance requirements of the second control data D21 and the second control data D22 are equal to each other (YES in S362), the control device 10 allocates an equivalent communication band (communication upper limit volume) corresponding to a data volume to the second control data D21 and the second control data D22 with respect to one cyclic period, and divides and transmits the second control data D21 and the second control data D22 (S363). The term "equivalent" here means that a time for which all the second control data D21 is transmitted and a time for which all the second control data D22 is transmitted is the same. The control device 10 repeats transmission in a divided manner until all data of the second control data D21 and the second control data D22 are transmitted (NO in S364), and when all data are transmitted (YES in S364), the process ends.

When a priority of the second control data D21 is high (NO in S362, YES in S365), the control device 10 allocates a communication band (communication upper limit volume) preferentially to the second control data D21 with respect to one cyclic period and divides the second control data D21 and the second control data D22 and transmits the divided data (S366). The control device 10 repeats transmission in a divided manner until all data of the second control data D21 and the second control data D22 are transmitted (NO in S367), and when all data are transmitted (YES in S367), the process ends. In this case, when it is detected that transmission of all data of the second control data D21 is completed, the control device 10 may add a communication band allocated to the second control data D21 to a communication band of the second control data D22 for the remaining frames and perform transmission. Therefore, transmission of the second control data D22 can be completed quickly.

When a priority of the second control data D22 is high (NO in S362, NO in S365), the control device 10 allocates a communication band (communication upper limit volume) preferentially to the second control data D22 with respect to one cyclic period and respectively divides the second control data D21 and the second control data D22 and transmits the divided data (S368). The control device 10 repeats transmission in a divided manner until all data of the second control data D21 and the second control data D22 are transmitted (NO in S369), and when all data are transmitted (YES in S369), the process ends. In this case, when it is detected that transmission of all data of the second control data D22 is completed, the control device 10 may add a communication band allocated to the second control data D22 to a communication band of the second control data D21 for the remaining frames and perform transmission. Therefore, transmission of the second control data D21 can be quickly transmitted.

### . Transmission of second control data that is divided and transmitted and second control data that is transmitted without division.

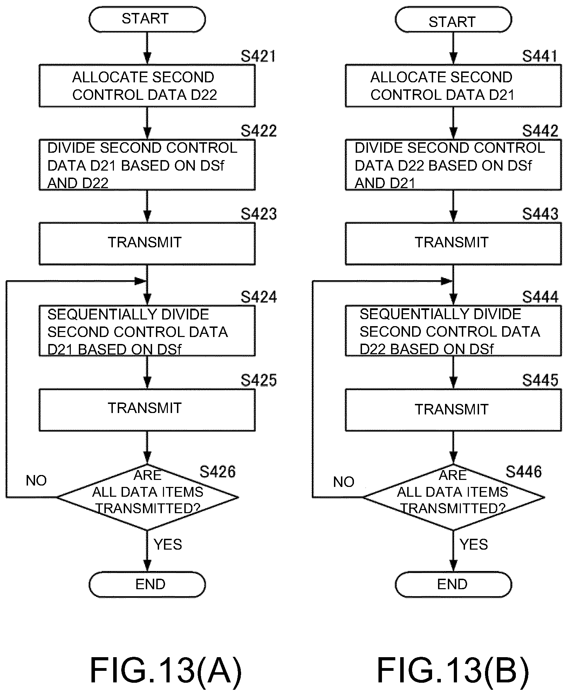

FIG. 13(A) and FIG. 13(B) are flowcharts showing examples of processes for second control data that is divided and transmitted and second control data that is transmitted without division. FIG. 13(A) shows a case in which the second control data D22 is not divided and the second control data D21 is divided (the case of Step S42 in FIG. 11) and FIG. 13(B) shows a case in which the second control data D21 is not divided and the second control data D22 is divided (the case of Step S44 in FIG. 11).

As shown in FIG. 13(A), when the second control data D22 is not divided, and the second control data D21 is divided, the control device 10 allocates a communication band within one cyclic period to the second control data D22 (S421). The control device 10 calculates a communication upper limit volume DSf of the second control data D21 in the cyclic period from the communication upper limit volume DSf and a data volume of the second control data D22. Specifically, the control device 10 subtracts a data volume (time unit) of the second control data D22 from the communication upper limit volume DSf and thus calculates a communication upper limit volume DSF'. The control device 10 divides the second control data D21 based on the recalculated communication upper limit volume DSf (S422). The control device 10 transmits first communication data of the divided second control data D21 in the same cyclic period as that of the second control data D22 (S423).

In the subsequent cyclic period, the control device 10 sequentially divides the second control data D21 based on the communication upper limit volume DSf (S424), and transmits the divided data according to a cyclic period (S425). The control device 10 repeats transmission in a divided manner until all data of the second control data D21 are transmitted (NO in S426), and when all data are transmitted (YES in S426), the process ends.

As shown in FIG. 13(B), when the second control data D21 is not divided and the second control data D22 is divided, the control device 10 allocates a communication band within one cyclic period to the second control data D21 (S441). The control device 10 calculates a communication upper limit volume DSf' of the second control data D22 in the cyclic period from the communication upper limit volume DSf and a data volume of the second control data D21. Specifically, the control device 10 subtracts a data volume (time unit) of the second control data D21 from the communication upper limit volume DSf and thus calculates a communication upper limit volume DSF". The control device 10 divides the second control data D22 based on the recalculated communication upper limit volume DSf' (S442). The control device 10 transmits first communication data of the divided second control data D22 in the same cyclic period as that of the second control data D21 (S443).

In the subsequent cyclic period, the control device 10 sequentially divides the second control data D22 based on the communication upper limit volume DSf (S444), and transmits the divided data according to a cyclic period (S445). The control device 10 repeats transmission in a divided manner until all data of the second control data D22 are transmitted (NO in S446), and when all data are transmitted (YES in S446), the process ends.

Here, while an FA system has been exemplified in the above description, the above configuration and process can be applied to other systems in which data for which a time is guaranteed using a cyclic period and data having a longer guarantee time than a cyclic period and having a larger data volume than a data volume based on the cyclic period are transmitted, and the above actions and effects can be obtained.

In addition, in the above description, for easy explanation, transmission of data from the control device 10 to the slave device 211, the slave device 212, and the slave device 221 via the control network 30 has been mainly described. However, each data include data that is transmitted from the slave device 211, the slave device 212, and the slave device 221 and replied to the control device 10, and the above process can also be applied to such data and the above actions and effects can be obtained. That is, the above process can be applied to second control data that is communicated via the control network 30, and the above actions and effects can be obtained. For example, regarding second control data for a robot device, data that is transmitted from the control device 10 to the slave device 221 includes a log data acquisition command, and data that is transmitted (replied) from the slave device 221 to the control device 10 includes logging data (for example, angle data of a motor for several tens of seconds) corresponding to the acquisition command.

In addition, while performing of communication according to a TDMA scheme has been described above, division and transmission of second control data can be realized according to a CDMA scheme or the like using the above concept.

### [Description of the Symbols]

1 Control system
10 Control device
30 Control network
60 Information communication network
61 Personal computer
62 Industrial personal computer
63 Database device
100 Data bus
101 CPU
102 Memory
103 Storage medium
104 Transmission and reception part
105 Upper level communication part
110 Communication management part
111 First control system communication management
112 Second control system communication management
113 Information system communication management
121 Cyclic communication part
122 Message communication part
130 Communication driver
141 User application processing part
142 Other processing part
211, 212, 221 Slave device

## Claims

1. A control device (10), **characterized in that** the control device (10) comprises:
a cyclic communication part (121) configured to control communication of first control data of which arrival in a first guarantee time is guaranteed according to a preset cyclic period and second control data of which arrival in a second guarantee time longer than the cyclic period is guaranteed and of which a sequence of information included is determined; and
a communication management part (110) configured to manage a communication schedule of the first control data and the second control data,
wherein, when a data volume of the second control data exceeds a transmission volume for the second control data based on the cyclic period and a data volume of the first control data, the communication management part (110) divides the second control data into a plurality of communication data according to the transmission volume for the second control data, and
the communication management part (110) attaches an identifier indicating communication in a divided manner, a data volume of the second control data, and a communication order according to division into the plurality of communication data, and provides the plurality of communication data to the cyclic communication part (121).

2. The control device (10) according to claim 1,
wherein, when there are a plurality of second control data, the communication management part (110) performs division for each of the plurality of second control data using the second guarantee time for each of the plurality of second control data and the communication volume for the second control data and provides the divided data to the cyclic communication part (121).

3. The control device (10) according to claim 2,
wherein the communication management part (110) provides the communication data formed from the plurality of second control data to the cyclic communication part (121) in a manner that the data is communicated within the same cyclic period.

4. The control device (10) according to any one of claims 1 to 3,
wherein the communication management part (110) attaches a data volume to each of the plurality of communication data and provides the data to the cyclic communication part (121).

5. The control device (10) according to any one of claims 1 to 4, comprising
a message communication part (122) configured to control transmission and reception of information system data which is different from the first control data and the second control data and for which a time is not guaranteed,
wherein the communication management part (110) divides the second control data using a communication volume of the information system data.

6. A control system (1), **characterized in that** the control system (1) comprises:
the control device (10) according to any one of claims 1 to 5; and
a robot device or a robot control device that is communicably connected to the control device (10),
wherein the second control data includes a command group for robot control.

7. A control method, **characterized in that** the control method comprises:
a cyclic communication process of controlling communication of first control data of which arrival in a first guarantee time is guaranteed according to a preset cyclic period and second control data of which arrival in a second guarantee time longer than the cyclic period is guaranteed and of which a sequence of information included is determined; and
a communication management process of managing a communication schedule of the first control data and the second control data,
wherein the communication management process includes the following processes:
determining a transmission volume for second control data using the cyclic period and a data volume of the first control data,
when a data volume of the second control data exceeds a communication volume for the second control data, dividing the second control data into a plurality of communication data according to the communication volume for the second control data,
attaching an identifier indicating communication in a divided manner, a data volume of the second control data, and a transmission order according to division into the plurality of communication data, and
providing the plurality of communication data to the cyclic communication process.

8. A control program, **characterized in that** the control program comprises:
a cyclic communication process of controlling communication of first control data of which arrival in a first guarantee time is guaranteed according to a preset cyclic period and second control data of which arrival in a second guarantee time longer than the cyclic period is guaranteed and of which a sequence of information included is determined; and
a communication management process of managing a communication schedule of the first control data and the second control data,
wherein the control program causes an information processing device to execute the following processes in the communication management process:
determining a communication volume for second control data using the cyclic period and a data volume of the first control data,
when a data volume of the second control data exceeds a communication volume for the second control data, dividing the second control data into a plurality of communication data according to the communication volume for the second control data,
attaching an identifier indicating communication in a divided manner, a data volume of the second control data, and a transmission order according to division into the plurality of communication data, and
providing the plurality of communication data to the cyclic communication process.
